# EUROPÄISCHE PATENTSCHRIFT

(11) **EP 0 800 885 B1**
(45) Veröffentlichungstag und Bekanntmachung des Hinweises auf die Patenterteilung: **19.06.2002**
(21) Anmeldenummer: 97105649.4
(22) Anmeldetag: 04.04.1997
(51) Int. Cl.: B23D 65/02

(54) **Vorrichtung zum Herausstanzen von Sägezähnen aus einem Bandmaterial**
Device for punching of saw teeth in band material
Dispositif pour le poinçonnage de dents de scie dans un matériau sous forme de bande

(30) Priorität: 12.04.1996 DE 19614537
(43) Veröffentlichungstag der Anmeldung: 15.10.1997
(73) Patentinhaber: Haas, Hans Robert, 42853 Remscheid (DE)
(72) Erfinder: Haas, Hans Robert, 42853 Remscheid (DE)
(74) Vertreter: Eichler, Peter, Dipl.-Ing.

(56) Entgegenhaltungen:
- DE-A- 2 332 685
- DE-A- 3 213 572
- US-A- 2 603 251

## Beschreibung

Die vorliegende Erfindung betrifft eine Vorrichtung zum Herausstanzen von Sägezähnen aus einem Bandmaterial, welches mittels Bandfördereinrichtung diskontinuierlich in Vortriebsschritten von vorgegebener Länge gefördert und unter einer vorgegebenermaßen zu den Vortriebsruhezeiten getakteten Stanzmatrize längsrandseitig mit den Sägezähnen versehen wird (siehe z.Bsp. DE 32 13 572).

Derartige Vorrichtung ist allgemein bekannt. Bei diesen Vorrichtungen wird das Bandmaterial mittels einer Bandfördereinrichtung diskontinuierlich in Vortriebsschritten vorgegebener Länge gefördert. Die Länge der Vortriebsschritte ist durch die Sägezahnteilung vorgegeben. Jeder Sägezahn muß einzeln herausgestanzt werden, um die gewünschte Zahnspitzenschärfe zu erhalten. Daher ist ein Maß für die Herstellungsgeschwindigkeit derartiger Bandsägen die maschinenbezogene Hubzahl, mit welcher das Stanzwerkzeug oszillierend angetrieben wird.

Das Stanzwerkzeug wird quer zur Bewegungsrichtung des Bandmaterials derart getaktet oszillierend bewegt, daß jeweils zu den Vortriebsruhezeiten der Bandfördereinrichtung die Stanzmatrize einen Zahn aus dem Längsrand des angeförderten Bandmaterials herausstanzt.

Bei diesen bekannten Vorrichtungen ist verwirklicht, daß die Zeittakte des Vortriebs sowie des Stanzvorgangs in obigem Sinne aufeinander abgestimmt sind. Dies bedeutet, daß entweder nur Vortrieb oder entweder nur Stanzvorgang erfolgt.

Derartige Vorrichtungen haben sich in der Praxis ohne weiteres bewährt, sie haben jedoch den entscheidenen Nachteil, daß das Verhältnis zwischen diskontinuierlichem Vortriebstakt und Stanztakt starr eingestellt ist. Dies erfolgt bei der bekannten Stanzvorrichtung über fest zueinander positionierte Exzenter.

Dieser Ausführungsform liegt die Überlegung zugrunde, daß der Vortriebsweg pro Vortriebstakt stets konstant ist. Genau genommen ist dies jedoch nicht immer gewährleistet. Das grundsätzliche Problem besteht daher darin, daß auch ein gewisser Schlupf beim Vortrieb des Bandmaterials berücksichtigt werden muß.

Es ist daher Aufgabe der Erfindung, die bekannte Stanzvorrichtung so weiterzubilden, daß die Zahnspitzen der sägenden Zähne auch unter Berücksichtigung des Schlupfes beim Vortrieb des Bandmaterials auf einer einzigen durchgehenden geraden Linie liegen.

Diese Aufgabe löst die Erfindung damit, daß eine Bandwegmeßeinrichtung zur Messung der tatsächlich zurückgelegten Vortriebslänge vorgesehen ist, und daß eine Steuereinrichtung zur Ansteuerung eines Motors der Bandfördereinrichtung mit dem Meßsignal beaufschlagt wird, wobei die Ansteuerung erfolgt, bis die tatsächlich zurückgelegte Vortriebslänge mit der vorgegebenen Länge des Vortriebsschritts übereinstimmt.

Aus der Erfindung ergibt sich der Vorteil, daß unabhängig von einem eventuell auftretenden Schlupf beim Vortrieb des Bandmaterials stets eine identische Vortriebslänge abgefahren wird, so daß die Zahnteilung über die gesamte Länge des Bandmaterials identisch ist.

Dieser Vorteil wird dadurch erreicht, daß zwischen der diskontinuierlich angetriebenen Bandfördereinrichtung und der Bandwegmeßeinrichtung ein Regelkreis aufgebaut wird, der den Motor der Bandfördereinrichtung so lange ansteuert, bis die tatsächlich zurückgelegte Vortriebslänge mit der vorgegebenen Länge des Vortriebsschritts übereinstimmt.

Es wird daher während eines Vortriebsschritts stets ein Soll-Ist-Vergleich zwischen dem vorgegebenen Wert für die Zahnteilung und der tatsächlichen Vortriebslänge durchgeführt. Hierzu wird die abgefahrene Vortriebslänge schlupffrei erfaßt und einer Steuereinrichtung zur Ansteuerung des Bandfördermotors aufgegeben.

Durch einen ständigen Soll-Ist-Vergleich der jeweils abgefahrenen Länge mit dem vorgegebenen Wert der Zahnteilung wird der Bandfördermotor so lange angetrieben bis der Istwert mit dem Sollwert übereinstimmt.

Es erfolgt daher ein Heranfahren des jeweiligen Vortriebsschritts bis an die Länge der Zahnteilung. In dem Moment wird der Bandfördermotor gestoppt.

Aus der Erfindung ergibt sich der weitere Vorteil, daß infolge der schlupfkompensierten Schrittlänge des Vortriebs auch erheblich höhere Hubzahlen der Stanzmatrize gefahren werden können. Infolge des Wegfalls mechanischer Kopplung zwischen den Antriebstakten zum Vortrieb und den Hubtakten zum Stanzvorgang entfällt auch jegliches mechanisches Spiel, weil die entsprechenden Getriebeglieder ebenfalls nicht mehr notwendig sind.

Die spielfreie Kopplung zwischen Stanzmatrize und Bandfördermotor vermeidet daher unnötige Toleranzen. Alle Zahnspitzen liegen daher auf einer einzigen durchgehenden geraden Linie. Alle Zahnspitzen sind somit gleichermaßen am Schneidvorgang beteiligt. Der Verschleiß verteilt sich somit gleichmäßig auf alle Zahnspitzen. Die Werkzeugstandzeit wird erhöht. Dennoch können erheblich höhere Hubzahlen gefahren werden. In Versuchen wurden Hubzahlen von 600 pro Minute erzielt. Dieser Wert ist trotz hervorragender Genauigkeit bei der Zahnspitzengeometrie sogar noch steigerbar.

Wesentlicher Aspekt der Erfindung ist daher auch das schlupffreie Messen der jeweiligen Schrittlänge. Hierzu können Meßrollen od.dgl. vorgesehen sein. Diese Meßrollen sind zweckmäßigerweise mit Leichtlauflagern gelagert, um eine 1:1 Abtastung des jeweils vorliegenden differentiell kleinen Antriebswegsstücks zu ermöglichen.

Diesbezüglich muß die Wegmeßrolle nämlich schlupffrei auf dem vorbeigezogenen Bandmaterial aufliegen. Da die Wegmeßrolle praktisch widerstandsfrei abrollen kann, kann diese Forderung eingehalten werden.

Von besonderem Vorteil ist eine Weiterbildung, bei welcher der Bandfördermotor ein diskontinuierlich angesteuerter Servomotor ist. Hierzu umfaßt die Steuereinrichtung einen zugeordneten Servoverstärker. Derartiger Servomotor kann extrem schnell und trotzdem präzise in vorgegebenen Winkelschritten gesteuert werden. Daher ermöglichen auch kleine Motorleistungen eine hohe Hubzahl.

Eine verschleißfreie Kopplung zwischen Bandfördermotor und dem eigentlichen Bandantrieb läßt sich erreichen, wenn als Bandantrieb ein Satz von Förderrollenpaaren vorgesehen wird. Jeweils ein Förderrollenpaar ist eingangsseitig und das zweite Förderrollenpaar ausgangsseitig der Stanzmatrize angeordnet. Die getriebliche Kopplung zwischen Bandfördermotor und den Förderrollenpaaren wird von möglichst schlupffreien Antrieben gebildet. Hierfür kommen insbesondere Zahnriemen in Betracht. Dabei kann ein einziger Bandfördermotor ohne weiteres beide Bandförderrollenpaare antreiben.

Die mit der Vorrichtung nach dieser Erfindung herstellbaren Bandsägeblätter zeichnen sich insbesondere durch Sägezähne aus, die auf einer einzigen durchgehenden geraden Linie liegen.

Es muß daher auch sichergestellt sein, daß das zugeführte Bandmaterial in Seitenrichtung fest eingespannt ist, wenn das Herausstanzen eines Zahns erfolgt. Hierzu wird bekanntermaßen das Bandmaterial entlang eines Anschlags geführt, wobei der Anschlag an einer Kante des Bandmaterials anliegt.

Will man die angestrebten hohen Hubzahlen von etwa 600 pro Minute erreichen und dabei sogar noch die Schärfe der Sägezahnspitzen verbessern, wird vorgeschlagen, das Bandmaterial mit dem Bandrücken an einem Bandrückenanschlag zu führen, so daß die Zahnspitzen freilaufen.

Hierin unterscheidet sich die Erfindung vom bisherigen Stand der Technik. Bis jetzt wurde nämlich das Bandmaterial im Zahnspitzenbereich an einem Anschlag geführt. Damit die nunmehr auf einer durchgehenden geraden Linie liegenden Zahnspitzen nicht unnötig durch Kontakt mit dem Anschlag beeinträchtigt werden, damit der Anschlag nicht unnötig verschleißt, damit eine schonende Anlage des Bandmaterials gewährleistet ist, soll nunmehr lediglich noch der Bandrücken über einen entsprechenden Bandrückenanschlag geführt werden.

Zusätzlich kann vorgesehen sein, den Bandrückenanschlag quer zur Bandförderrichtung verschiebar beweglich zu lagern. Auf diese Weise wird der Abstand zwischen Stanzmatrize und Bandrücken jeweils so eingestellt wie es die Geometrie des fertigen Sägeblatts verlangt.

Ferner hat sich gezeigt, daß die präzise Fertigung der einzelnen Zähne nach dieser Erfindung mit den praktisch angestrebten Hubzahlen zusätzlich noch verbessert werden kann, wenn das Stanzwerkzeug auf einem Zahnschlitten sitzt, der gegenüber dem Maschinengehäuse oszillierend angetrieben ist, wobei der Zahnschlitten in Wälzlagerführungen am Maschinengehäuse sitzt.

Die damit erzielbare praktisch verschleißfreie Zahnschlittenführung ist wartungsfrei und bleibt auch im ununterbrochenen Fertigungsbetrieb maßgenau.

Will man darüber hinaus noch unter Einsparung zusätzlichen Bauaufwandes erreichen, daß das Bandmaterial gegen den Bandrückenanschlag zwangsgehalten wird, wird vorgeschlagen, die Drehachsen der Förderrollenpaare mit ihrem von dem Bandrückenanschlag angewandten Ende in Förderrichtung zu neigen. Die tatsächlich auf das Bandmaterial ausgeübte Vorschubkraft erfährt daher eine Komponente in Längsrichtung des Bandmaterials sowie eine quer dazu liegende Komponente, die das Bandmaterial mit dem Rücken an den Bandrückenanschlag hält.

Im folgenden wird die Erfindung anhand von Ausführungsbeispielen näher erläutert. Es zeigen:
- Fig.1: eine Vorrichtung zum Herausstanzen von Sägezähnen aus einem Bandmaterial in schematischer Seitenansicht.
- Fig.2: eine schematische Draufsicht des Bereichs II-II gemäß Fig.1.

Sofern im folgenden nichts anderes gesagt ist, gilt die folgende Beschreibung stets für alle Figuren.

Die Figuren zeigen eine Stanzmaschine zum Herausstanzen von Sägezähnen aus einem Bandmaterial 2. Das Bandmaterial 2 wird von einer Abwickelspule 3 abgezogen und einer Aufwikkelspule 4 zugeführt. Abwickelspule 3 und Aufwickelspule 4 sind mit einem Abwickelantrieb 5 bzw. Aufwickelantrieb 6 verbunden. Der Abwickelantrieb 5 ist so angesteuert, daß vor dem mit II-II bezeichneten Bereich der Stanzmaschine 1 eine vorauslaufende Verschlappungszone 7 im Bandmaterial sowie eine nachlaufende Verschlappungszone 8 im Bandmaterial entsteht. Diese Verschlappungszonen sind zum Erhalt genau definierter Längsspannungen im Bandmaterial 2 innerhalb des mit II-II bezeichneten Bereichs notwendig.

Innerhalb des mit II-II bezeichneten Bereichs wird das Bandmaterial 2 von einer Bandfördereinrichtung 9 diskontinuierlich in den Vortriebsschritten vorgegebener Länge gefördert und unter einer vorgegebenermaßen zu den Vorcriebsruhezeiten getakteten Stanzmatrize 14 längsrandseitig mit Sägezähnen versehen.

Hierzu ist innerhalb des mit II-II bezeichneten Bereichs ein eingangsseitiges Förderrollenpaar 10 vorgesehen, welches mit einem ausgangsseitigen Förderrollenpaar 11 zusammenwirkt. Zum Antrieb dient ein gemeinsamer Bandfördermotor 22, der über jeweils einen Zugmittelantrieb 12 bzw. 13 mit dem eingangsseitigen bzw. ausgangsseitigen Förderrollenpaar 10,11 getrieblich gekoppelt ist.

Ferner ist im Zulaufbereich des Bandes vor Eintritt in den mit II-II bezeichneten Bereich eine Bandwegmeßeinrichtung 15 vorgesehen. Diese Bandwegmeßeinrichtung 15 besteht aus einem Meßrad 16 welches auf einer Breitseite 17 des Bandmaterials 2 aufliegt. Auf der gegenüberliegenden Breitseite 18 ist eine mitlaufende Anpressrolle 19 vorgesehen, welche das dazwischen geführte Bandmaterial an das Meßrad 16 mit derart großer Antriebskraft hält, daß das Meßrad bei vorgetriebenem Bandmaterial schlupffrei die tatsächlich zurückgelegte Vortriebslänge abgreifen kann. Die tatsächlich zurückgelegte Vortriebslänge wird über die Meßsignalleitung 20 einer Steuereinrichtung 21 zugeführt und dort als Signal verarbeitet. Ein Ausgang der Steuereinrichtung 21 ist mit dem Bandfördermotor 22 verbunden. Der Bandfördermotor wird über die Steuereinrichtung 21 diskontinuierlich so angesteuert, daß der pro Antriebsschritt zurückgelegte Bandweg identisch groß ist mit der vorgegebenen Länge der Zahnteilung.

Daher wird die Steuereinrichtung 21 über die Länge des vom Meßrad 16 abgetasteten tatsächlichen Wegs einen ständigen Abgleich mit einem für die Zahnteilung 45 entsprechenden Sollwert durchführen und den Bandfördermotor 22 so lange ansteuern, bis der abgetastete Weg mit der Zahnteilung 45 übereinstimmt.

Die Ansteuerung erfolgt daher so lange, bis die tatsächlich zurückgelegte Vortriebslänge innerhalb vorgegebener Zahnteilung mit der vorgegebenen Länge des Vortriebsschritts übereinstimmt, wobei der Vortriebsschritt dem Maß der Zahnteilung entspricht.

Im gezeigten Ausführungsbeispiel umfaßt die Steuereinrichtung 21 auch einen Servoverstärker 23 für den Bandfördermotor 22, der hier als diskontinuierlich angesteuerter Servomotor ausgeführt ist. Die schnelle und präzise Ansteuerbarkeit derartiger Servomotoren kann im Sinne der Erfindung umgesetzt werden, wenn die Bandfördereinrichtung 9 aus einem eingangsseitgen Förderrollenpaar 10 sowie einem ausgangsseitigen Förderrollenpaar 11 besteht und ein schlupffreier Zugmittelantrieb über jeweils einen Zahnriemen 12 bzw. 13 vom Bandfördermotor 22 zum zugeordneten Förderrollenpaar 10 bzw. 11 gespannt ist.

Von den Förderrollenpaaren ist daher stets eine Förderrolle angetrieben, während die gegenüberliegende Förderrolle der Einklemmung des dazwischen befindlichen Bandes dient. Die vorgegebene Klemmkraft zwischen Klemmrolle und angetriebener Förderrolle ist so groß, daß unter Berücksichtung der normalen Betriebsverhältnisse ein praktisch schlupffreier Vortrieb gewährleistet ist.

Dennoch kann es hier zu einem Schlupf kommen, so daß der jeweilige Vortriebsschritt dann auch kleiner als das Maß der Zahnteilung werden kann.

Um dies festzustellen dient die Bandwegmeßeinrichtung 15, die über das drehbare Meßrad 16 auf dem zu fördernden Bandmaterial 2 aufliegt. Das Meßrad 15 wird gleichermaßen von der gegenüberliegenden Anpressrolle 19 mit vorgebener Andruckkraft an das dazwischen laufende Bandmaterial 2 gehalten, so daß das leichtlaufende Meßrad den tatsächlichen Vortrieb völlig schlupffrei abtasten kann.

Bevor nun auf die Funktion eingegangen wird, soll auf die Bauteile der Stanzmatrize 14 noch näher eingegangen werden. An einem quer zur Bandrichtung oszillierend angetriebenen Zahnschlitten 24 sitzt ein Zahnstempel 27, welcher dem Bandmaterial 2 zugewandt ist. Der Zahnschlitten 24 ist gegenüber dem Maschinengehäuse 25 in Wälzlagerführungen 26 gelagert. Die Wälzlagerführungen können ggf. von Nadellagern gebildet werden. Hierdurch wird der Zahnschlitten 24 leicht und reibungsarm innerhalb des Maschinengehäuses 25 beweglich und kann folglich verschleißfrei hohe Hubzahlen ausführen. Während der Zahnstempel 27 von der Oberseite an das Bandmaterial 2 herangefahren wird, befindet sich auf der gegenüberliegenden Unterseite die Gegenplatte 28 zur Stanzmatrize 14, auf welcher das Bandmaterial 2 während des Stanzvorgangs flach aufgelegt ist. Als Antrieb des Zahnschlittens 24 ist ein Zahnschlittenexzenter 29 vorgesehen, an welchem auf vorgegebenem Kurbelradius eine Pleuelstange angreift, die ihrerseits mit dem geradgeführten Zahnschlitten 24 gekoppelt ist. Infolge der Drehung des Exzenters 29 kann daher der Zahnschlitten 24 eine oszillierende Hubbewegung ausführen. Diese Hubbewegung ist dem Zahnschlittenexzenter 29 von dem Stanzmotor 30 aufgeprägt. Diese Hubbewegung muß zeitlich mit den diskontinuierlichen Vortriebsschritten der Bandfördereinrichtung 9 getaktet werden. Hierzu dient ein am Zahnschlittenexzenter 29 angebrachter Geber 31, der mit einem ortsfesten Nehmer 32 zusammenwirkt. Der Nehmer gibt ein entsprechendes Signal an die Steuereinrichtung 21, wenn sich Geber 31 und Nehmer 32 in korrespondierender Stellung befinden. Dieses Signal bewirkt eine Freigabe des Stanzmotors 30 im Sinne eines einzigen Stanzhubes, wobei sich der Zahnschlittenexzenter 29 einmal vollständig um seine Achse dreht.

Nachdem dieser Stanzhub erfolgt ist, erfährt die Steuereinrichtung 21 vom Vollzug über das erneut vorliegende Signal des Nehmers 32. Dieses Signal veranlaßt die Steuereinrichtung 21 zur Ansteuerung des Bandfördermotors 22 um einen Antriebsschritt vorgegebener Länge (=Zahnteilung). Während des Vortriebs wird das jeweils vorbeilaufende Bandmaterial 2 vom Meßrad 16 abgetastet. Über einen nicht näher bezeichneten Wandler wird ein entsprechendes Informationssignal an die Steuereinrichtung 21 gegeben, solange bis das Meßrad 16 den Vortrieb um das Maß einer Zahnteilung meldet. Die Steuereinrichtung 21 hält den Bandfördermotor 22 an und gibt über eine entsprechende Signalleitung Signal an den Stanzmotor 30, einen einzigen Stanzhub auszuführen. Dabei geraten Geber 31 und Nehmer 32 aus ihrem gegenseitigen Einflußbereich, so lange, bis der Zahnschlittenexzenter 29 wieder die gezeigte Position eingenommen hat. Das entsprechende Signal des Nehmers 32 beaufschlagt die Steuereinrichtung 21 erneut in obigem Sinne und der Vorgang wiederholt sich.

Ferner übernimmt die Steuereinrichtung 21 auch die Ansteuerung des Abwickelantriebs 5 sowie des Aufwickelantriebs 6 derart, daß das abgewickelte Band sowie das aufzuwickelnde Band stets schlapp gehalten werden, bevor das Band in den Einflußbereich des Regelkreises aus tatsächlicher Bandwegerfassung und gesteuertem Vortrieb gelangt (Bereich II-II).

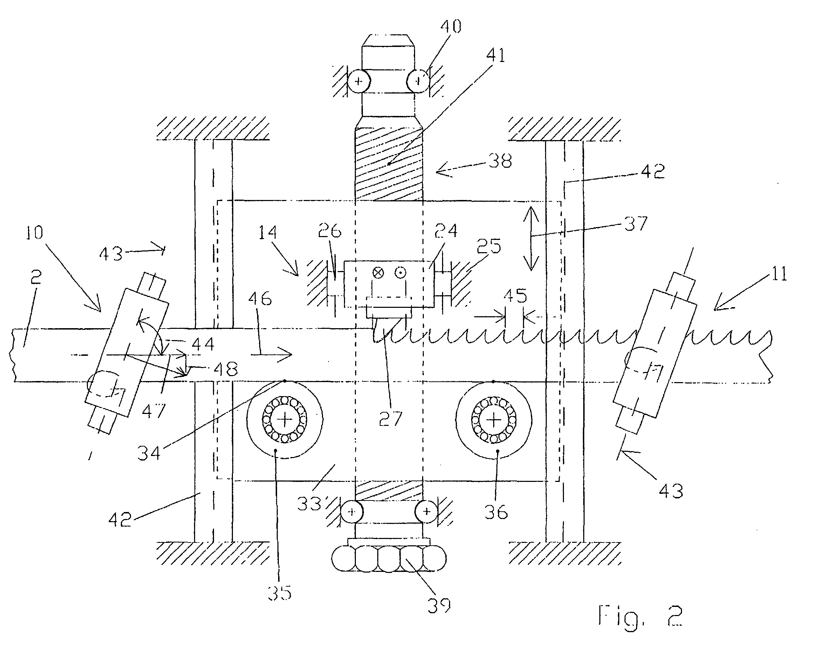

Ferner zeigt Fig.2 weitere Details. Das von links nach rechts laufende Bandmaterial 2 liegt mit dem Bandrücken an einem Bandrückenanschlag 34 an. Der Bandrückenanschlag 34 ist auf der Basisplatte 33 montiert. Der Bandrückenanschlag wird gebildet von Wälzlagern 35,36. Während des Vortriebs und während des Stanzvorgangs wird das Bandmaterial 2 stets mit dem Bandrücken an den Bandrückenanschlag 34 in eindeutiger Position gehalten. Die Zahnspitzen laufen völlig frei und berührungsfrei gegenüber irgendwelchen Metallteilen.

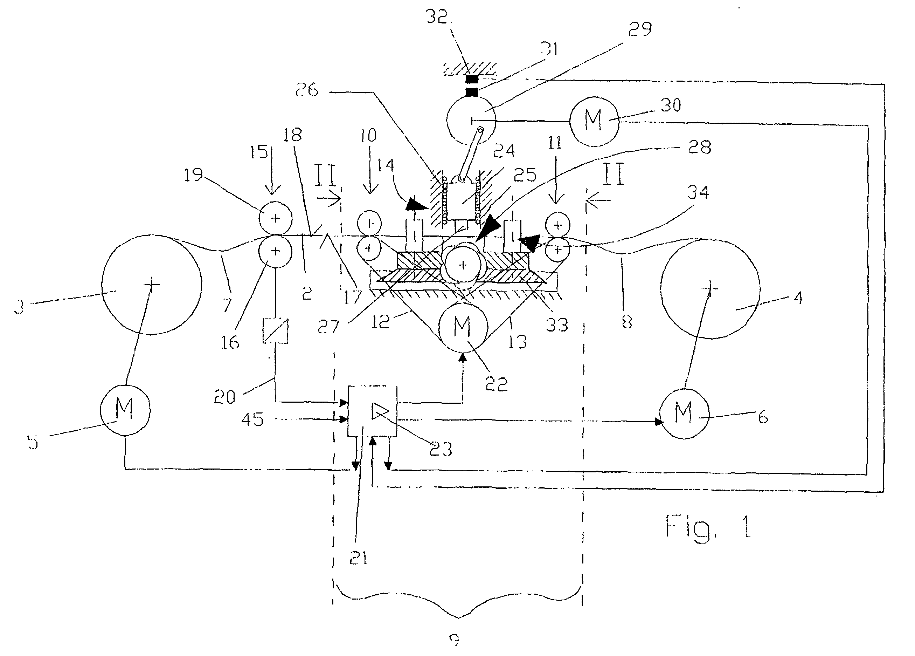

Die Basisplatte 33 ist über geeignete Schwalbenschwanzführungen (siehe Fig.1) am Maschinengehäuse derart gelagert, daß eine Verstellung des Bandrückenanschlags 34 quer zur Bandförderrichtung möglich ist.

Auf diese Weise wird die Relativposition des Bandrückens zum Vertikalweg des Zahnschlittens eingestellt, so daß Bandmaterial 2 unterschiedlicher Breiten mit ein und derselben Stanzmaschine 1 bearbeitet werden kann.

Zu diesem Zweck ist die Basisplatte 33 in den Verstellrichtungen 37 über eine ortsfest drehbar gelagerte Stellspindel 38 in einer Ebene senkrecht zur Zeichenebene gemäß Fig.1 verstellbar. Die Verstellspindel 38 trägt ein Umfangsgewinde 41, vorzugsweise ein Trapezgewinde, und durchsetzt mit diesem Trapezgewinde eine entsprechende Gewindebohrung in der Basisplatte 33. Dabei ist die Verstellspindel 38 in Längsrichtung nicht beweglich. Sie wird von endseitig angedeuteten Wälzlagern 40 zwar drehbar jedoch axial fixiert gehalten.

Zur Betätigung der Verstellspindel 38 dient ein aufgesetztes Verstellrad 39, welches drehfest mit der Verstellspindel 38 gekoppelt ist.

Innerhalb der seitlich angeordneten Längsführungen 42 kann daher die Basisplatte 33 jede beliebige Position einnehmen und bildet mit ihrem Bandrückenanschlag 34 eine definierte Anschlagsposition für das Bandmaterial 2 aus.

Damit das Bandmaterial 2 mit dem Bandrücken in allen Betriebssituationen am Bandrückenanschlag 34 gehalten wird, sind die Drehachsen 43 der Förderrollenpaare 10,11 mit ihrem von dem Bandrückenanschlag 34 abgewandten Ende in Förderrichtung geneigt. Es wird somit ein Neigungswinkel 44 zwischen der Förderrichtung und der Drehachsenrichtung aufgespannt, der förderrichtungsabwärts gesehen kleiner als 90 Grad ist.

Die hierdurch verursachte Schrägförderwirkung der Förderrollenpaare wird ausgenutzt, um das Bandmaterial mit dem Rücken am Bandrückenanschlag 34 zu halten. Wie das Kräftedreieck gemäß Fig.2 zeigt, ist die Umfangskraft der Förderrolle zu zerlegen in eine Komponente in Förderrichtung 46 und eine hierzu senkrechte Komponente. In Förderrichtung 46 liegt die an der Förderung des Bandmaterials 2 beteiligte Förderkraft 47. In der hierzu senkrechten Richtung liegt die wirksame Anpresskraft 48, welche das Bandmaterial mit dem Rücken an den Anschlag 34 hält.

Die Erfindung ist auch geeignet zum Ausstanzen jeglicher Aussparungen an Bändern jeder Art.

### Bezugszeichenaufstellung:

- 2: Bandmaterial
- 3: Abwickelspule
- 4: Aufwickelspule
- 5: Abwickelantrieb
- 6: Aufwickelantrieb
- 7: vorauslaufende Verschlappungszone
- 8: nachlaufende Verschlappungszone
- 9: Bandförderreinrichtung
- 10: eingangsseitiges Förderrollenpaar
- 11: ausgangsseitiges Förderrollenpaar
- 12: Zugmittelantrieb für 10
- 13: Zugmittelantrieb für 11
- 14: Stanzmatrize
- 15: Bandwegmeßeinrichtung
- 16: Meßrad
- 17: Breitseite
- 18: gegenüberliegende Breitseite
- 19: Anpreßrolle
- 20: Wegsignalleitung
- 21: Steuereinrichtung
- 22: Bandfördermotor
- 23: Servoverstärker
- 24: Zahnschlitten
- 25: Maschinengehäuse
- 26: Wälzlagerführung
- 27: Zahnstempel
- 28: Gegenplatte
- 29: Zahnschlittenexzenter
- 30: Stanzmotor
- 31: Geber
- 32: Nehmer
- 33: Basisplatte
- 34: Bandrückenanschlag
- 35: Wälzlager
- 36: Wälzlager
- 37: Verstellrichtung
- 38: Verstellspindel
- 39: Verstellrad
- 40: Spindellagerung
- 41: Spindelgewinde
- 42: Längsführung
- 43: Drehachse der Förderrolle
- 44: Neigungswinkel
- 45: Teilung
- 46: Förderrichtung
- 47: Förderkraft
- 48: Anpreßkraft

## Patentansprüche

1. Vorrichtung zum Herausstanzen von Sägezähnen aus einem Bandmaterial (2) welches mittels Bandfördereinrichtung (9) diskontinuierlich in Vortriebsschritten vorgegebener Länge (45) gefördert und unter einer vorgegebenermaßen zu den Vortriebsruhezeiten getakteten Stanzmatrize (14) längsrandseitig mit den Sägezähnen versehen wird, **dadurch gekennzeichnet, daß**
1.1 eine Bandwegmeßeinrichtung (15) zur Messung der tatsächlich zurückgelegten Vortriebslänge vorgesehen ist, und daß
1.2 eine Steuereinrichtung (21) zur Ansteuerung eines Motors (22) der Bandfördereinrichtung (9) über eine Wegsignalleitung (20) mit dem Meßsignal der Bandwegmeßeinrichtung (15) beaufschlagt wird, wobei die Ansteuerung erfolgt, bis
1.3 die tatsächlich zurückgelegte Vortriebslänge mit der vorgegebenen Länge des Vortriebsschrits (45) übereinstimmt.

2. Vorrichtung nach Anspruch 1, **dadurch gekennzeichnet, daß** der Bandfördermotor (22) ein diskontinuierlich angesteuerter Servomotor ist und daß die Steuereinrichtung (21) einen zugeordneten Servoverstärker (23) umfaßt.

3. Vorrichtung nach Anspruch 1 oder 2, **dadurch gekennzeichnet, daß** die Bandfördereinrichtung (9) aus einem eingangsseitig sowie aus einem ausgangsseitig der Stanzmatrize (14) angeordneten Förderrollenpaar (10,11) besteht und daß jedes Förderrollenpaar (10,11) über jeweils einen - vorzugsweisen schlupffreien - Zugmittelantrieb (12,13) mit dem Bandfördermotor (22) verbunden ist.

4. Vorrichtung nach Anspruch 3, **dadurch gekennzeichnet, daß** der Zugmittelantrieb (12,13) von Zahnriemen gebildet wird.

5. Vorrichtung nach Anspruch 1, **dadurch gekennzeichnet, daß** die Bandwegmeßeinrichtung (15) über ein drehbar gelagertes Meßrad (16) verfügt, welches auf dem zu fördernden Bandmaterial aufliegt (17).

6. Vorrichtung nach Anspruch 5, **dadurch gekennzeichnet, daß** auf der gegenüberliegenden Breitseite (18) des Bandmaterials (2) eine Anpreßrolle (19) gegenüberliegend dem Meßrad (16) angeordnet ist.

7. Vorrichtung nach einem der Ansprüche 1 bis 6, **dadurch gekennzeichnet, daß** das Bandmaterial (2) mit dem Bandrücken an einem Bandrückenanschlag (34) geführt wird und daß die Zahnspitzen frei laufen.

8. Vorrichtung nach Anspruch 7, **dadurch gekennzeichnet, daß** der Bandrückenanschlag (34) quer zur Bandförderrichtung verschiebbar beweglich gelagert ist.

9. Vorrichtung nach Anspruch 7 oder 8, **dadurch gekennzeichnet, daß** der Bandrückenanschlag (34) von drehbaren Anschlagrollen (35,36) gebildet wird, an deren Umfangsfläche das Bandmaterial (2) mit seinem Bandrücken anliegt.

10. Vorrichtung nach Anspruch 7,8 oder 9, **dadurch gekennzeichnet, daß** die Drehachsen (43) der Förderrollenpaare (10,11) mit ihrem von dem Bandrückenanschlag (34) abgewandten Ende in Förderrichtung geneigt sind.

11. Vorrichtung nach einem der Ansprüche 1 bis 10, **dadurch gekennzeichnet, daß** das Stanzwerkzeug (27) auf einem oszillierend angetriebenen Zahnschlitten (24) sitzt, der gegenüber dem Maschinengehäuse mit Wälzlagerführungen (26) gelagert ist.

12. Vorrichtung nach Anspruch 11, **dadurch gekennzeichnet, daß** die Wälzlagerführungen von Nadellagern gebildet werden.

## Claims

1. Device for punching out saw teeth from a strip material (2) which is conveyed by means of a strip conveying device (9) intermittently in feed steps of a predetermined length (45) and is provided with the saw teeth on the longitudinal edge-side underneath a punching die (14) which operates at a fixed rhythm with respect to the feed pauses, **characterised in that**
1.1 a strip path measuring device (15) is provided for measuring the actually travelled feed length, and that
1.2 a control device (21) for controlling a motor (22) of the strip conveying device (9) is influenced via a path signal line (20) by the measuring signal of the strip path measuring device (15), wherein actuation is performed until
1.3 the actually travelled feed length corresponds to the specified length of the feed step (45).

2. Device according to claim 1, **characterised in that** the strip conveyor motor (22) is a servo-motor which is actuated intermittently and that the control device (21) comprises an associated servo-booster (23).

3. Device according to claim 1 or 2, **characterised in that** the strip conveying device (9) consists of a respective conveying roller pair (10, 11) one disposed on the input-side and one on the output-side of the punching die (14) and that each conveying roller pair (10, 11) is connected to the strip conveying motor (22) in each case by way of a - preferably slip-free - traction means drive (12, 13).

4. Device according to claim 3, **characterised in that** the traction means drive (12, 13) is formed by toothed belts.

5. Device according to claim 1, **characterised in that** the strip path measuring device (15) comprises a rotatably mounted measuring wheel (16) which lies against (17) the strip material which is to be conveyed.

6. Device according to claim 5, **characterised in that** on the opposite-lying face (18) of the strip material (2) there is disposed a pressing roller (19) lying opposite the measuring wheel (16).

7. Device according to any one of the claims 1 to 6, **characterised in that** the strip material (2) is guided with the back of the strip on a stop (34) for the back of the strip and that the tips of the teeth run freely.

8. Device according to claim 7, **characterised in that** the stop (34) for the back of the strip is mounted in a displaceably movable manner transverse to the strip conveying direction.

9. Device according to claim 7 or 8, **characterised in that** the stop (34) for the back of the strip is formed by rotatable stop rollers (35, 36), against the peripheral surface of which the strip material (2) lies with its back part.

10. Device according to claim 7, 8 or 9, **characterised in that** the axes of rotation (43) of the conveying roller pairs (10, 11) have their end remote from the stop (34) for the back of the strip inclined in the direction of conveyance.

11. Device according to any one of the claims 1 to 10, **characterised in that** the punching tool (27) is located on a tooth carriage (24) which is driven in an oscillating manner and is mounted with respect to the machine housing by means of roller bearing guides (26).

12. Device according to claim 11, **characterised in that** the roller bearing guides are formed by needle bearings.

## Revendications

1. Dispositif pour découper des dents de scie dans un matériau en bande (2) qui est transporté à l'aide d'un convoyeur de bande (9) de manière discontinue, par pas d'avance d'une longueur prédéfinie (45) et qui est doté des dents de scie sur son bord longitudinal sous une matrice de découpage (14) synchronisée en fonction des moments d'arrêt d'avance, **caractérisé**
1.1 en ce qu'il est prévu un dispositif de mesure de déplacement de bande (15) pour mesurer la longueur d'avance réellement parcourue,
1.2 et en ce qu'un dispositif de commande (21) destiné à commander un moteur (22) du convoyeur de bande (9) est sollicité par le signal de mesure du dispositif de mesure de déplacement (15) par l'intermédiaire d'une ligne de signaux de déplacement (20), la commande se faisant
1.3 jusqu'à ce que la longueur d'avance réellement parcourue coincide avec la longueur prédéfinie du pas d'avance (45).

2. Dispositif selon la revendication 1, **caractérisé en ce que** le moteur de convoyeur de bande (22) est un servomoteur à commande discontinue, et **en ce que** le dispositif de commande (21) comprend un servo-amplificateur associé (23).

3. Dispositif selon la revendication 1 ou 2, **caractérisé en ce que** le dispositif convoyeur de bande (9) se compose de paires de rouleaux convoyeurs (10, 11) disposées respectivement côté entrée et côté sortie de la matrice de découpage (14), et **en ce que** chaque paire de rouleaux convoyeurs (10, 11) est reliée par l'intermédiaire d'un mécanisme de traction (12, 13) - de préférence sans patinage - au moteur de convoyeur de bande (22).

4. Dispositif selon la revendication 3, **caractérisé en ce que** le mécanisme de traction (12, 13) est formé par des courroies dentées.

5. Dispositif selon la revendication 1, **caractérisé en ce que** le dispositif de mesure de déplacement de bande (15) dispose d'une roue de mesure (16) qui est montée en rotation et qui appuie (17) sur le matériau en bande à transporter.

6. Dispositif selon la revendication 5, **caractérisé en ce qu'**un galet presseur (19) est disposé en face de la roue de mesure (16), sur le côté plat opposé (18) du matériau en bande (2).

7. Dispositif selon l'une des revendications 1 à 6, **caractérisé en ce que** le matériau en bande (2) est guidé avec le dos de la bande au niveau d'une butée de dos de bande (34), et **en ce que** les dents de scie circulent librement.

8. Dispositif selon la revendication 7, **caractérisé en ce que** la butée de dos de bande (34) est mobile transversalement par rapport au sens de transport de bande.

9. Dispositif selon la revendication 7 ou 8, **caractérisé en ce que** la butée de dos de bande (34) est définie par des rouleaux de butée rotatifs (35, 36) sur la surface périphérique desquels le matériau en bande (2) est appliqué avec le dos de la bande.

10. Dispositif selon la revendication 7, 8 ou 9, **caractérisé en ce que** les axes de rotation (43) des paires de rouleaux convoyeurs (10, 11) sont inclinés avec leur extrémité opposée à la butée de dos de bande (34) dans le sens de transport.

11. Dispositif selon l'une des revendications 1 à 10, **caractérisé en ce que** l'outil de découpage (27) est posé sur un chariot à dent (24) qui est entraîné suivant un mouvement de va-et-vient et qui est monté par rapport au carter de machine à l'aide de guidages à roulement (26).

12. Dispositif selon la revendication 11, **caractérisé en ce que** les guidages à roulement sont formés par des roulements à aiguilles.
